Europäisches Patentamt

European Patent Office

Office européen des brevets

(11) Publication number: **0 454 259 A1**

# EUROPEAN PATENT APPLICATION

(21) Application number: 91200979.2

(22) Date of filing: 23.04.91

(51) Int. Cl.⁵: **A01K 5/00**, B01F 15/00, F16L 39/04

(30) Priority: 26.04.90 NL 9001006

(43) Date of publication of application:
30.10.91 Bulletin 91/44

(84) Designated Contracting States:
BE DE DK FR GB IT LU NL

(71) Applicant: Hardeman, Cornelis Nicolaas
6b, Woudegge
NL-3959 BJ Overberg(NL)

(72) Inventor: Hardeman, Cornelis Nicolaas
6b, Woudegge
NL-3959 BJ Overberg(NL)

(74) Representative: Iemenschot, Johannes
Andreas et al
Exterpatent P.O. Box 90649
NL-2509 LP The Hague(NL)

(54) Mobile mixing and dispensing device for animal feed.

(57) A mobile mixing and dispensing device for animal feed comprises a mobile frame (1), an essentially cylindrical mixing drum (4) which is mounted on the mobile frame so that it is rotatable about its longitudinal axis extending essentially in the horizontal direction. The mixing drum is provided with an infeed opening (19) for the feed ingredients to be mixed. One (8) of the end walls of the mixing drum is provided with a round outlet opening (23) for the mixed feed which is coaxial with the longitudinal axis of the mixing drum. The device also comprises a conveyor belt (36) mounted on the frame below the outlet opening and extending at right angles to the longitudinal axis of the mixing drum, for discharging to the side the mixed feed coming out of the outlet opening. The conveyor belt (36) runs from the centre (37), lying below the longitudinal axis (5) of the mixing drum (4), upwards towards both sides, and is movable in both directions. The outlet opening (23) and the conveyor belt (36) are fitted at the front side of the device, viewed in the direction of travel (43) of the device.

FIG. 1.

## BACKGROUND OF THE INVENTION

The invention relates to a mobile mixing and dispensing device for animal feed, comprising a mobile frame, an essentially cylindrical mixing drum which is mounted on the mobile frame so that it is rotatable about its longitudinal axis extending essentially in the horizontal direction, and which is provided with an infeed opening for the feed ingredients to be mixed, and of which one of the end walls is provided with a round outlet opening for the mixed feed which is coaxial with the longitudinal axis of the mixing drum, and also comprising a conveyor belt mounted on the frame below the outlet opening and extending at right angles to the longitudinal axis of the mixing drum, for discharging to the side the mixed feed coming out of the outlet opening.

Such a device is known from Dutch Patent Specification 7607053 and is used for mixing animal feed ingredients such as hay, silage, maize, concentrates etc. to a homogeneous feed. In the case of the known device the feed ingredients to be mixed are fed into the mixing drum through an infeed opening which is formed in the cylindrical circumferential wall of the mixing drum and which can be shut off by a flap-out part of the cylindrical circumferential wall of the mixing drum coinciding with the infeed opening. The mixed feed is discharged to the side via the outlet opening, a gap formed between the mixing drum and a cover for shutting off the outlet opening and a conveyor belt extending at right angles to the longitudinal axis of the mixing drum, and is dispensed into, for example, feed troughs or channels, while the device is moved along these troughs or channels.

The disadvantage of the known device is that the delivery of the mixed feed cannot be controlled satisfactorily.

## SUMMARY OF THE INVENTION

The object of the invention is to provide a mobile mixing and dispensing device in which this disadvantage is eliminated.

This object is achieved by a device of the type mentioned in the preamble, wherein the conveyor belt runs from the centre, lying below the longitudinal axis of the mixing drum, slanting upwards towards both sides, and is movable in both directions.

It has proved possible with the device according to the invention to dispense the mixed feed in a very well metered and controlled fashion.

The outlet opening and the conveyor belt are preferably fitted at the front side of the device, viewed in the direction of travel. This makes it easy to control the dispensing of the mixed feed from a vehicle pulling the device.

Preferred embodiments of the device are described in the sub-claims.

The invention will now be explained in greater detail with reference to the example of an embodiment below which is shown in the drawings.

## BRIEF DESCRIPTION OF THE DRAWINGS

Fig. 1 is a side view of a device according to the invention;

Fig. 2 is a rear view of the device of Fig. 1;

Fig. 3 is a front view of the device of Fig. 1;

Fig. 4 is a side view of the mixing drum used with the device of Fig. 1, in the region of the flap-out part of the circumferential wall;

Fig. 5 is a schematic longitudinal section of the central bearing of the mixing drum of the device of Fig. 1; and

Fig. 6 is a view at the end face of the bearing pin of Fig. 1, viewed in the direction of the arrow VI.

## DESCRIPTION OF THE PREFERRED EMBODIMENT

The mobile mixing and dispensing device for animal feed shown in the drawing comprises a mobile frame 1 which is provided with a single wheel axle set 2 and a drawbar 3 fitted at the front side for coupling to a pulling vehicle, for example an agricultural tractor. The device also comprises an essentially cylindrical mixing drum 4 which is fitted on the mobile frame in such a way that it rotates about its longitudinal axis 5 extending essentially in the horizontal direction. The mixing drum comprises an essentially cylindrical circumferential wall 6 and two end walls, a rear end wall 7 and a front end wall 8.

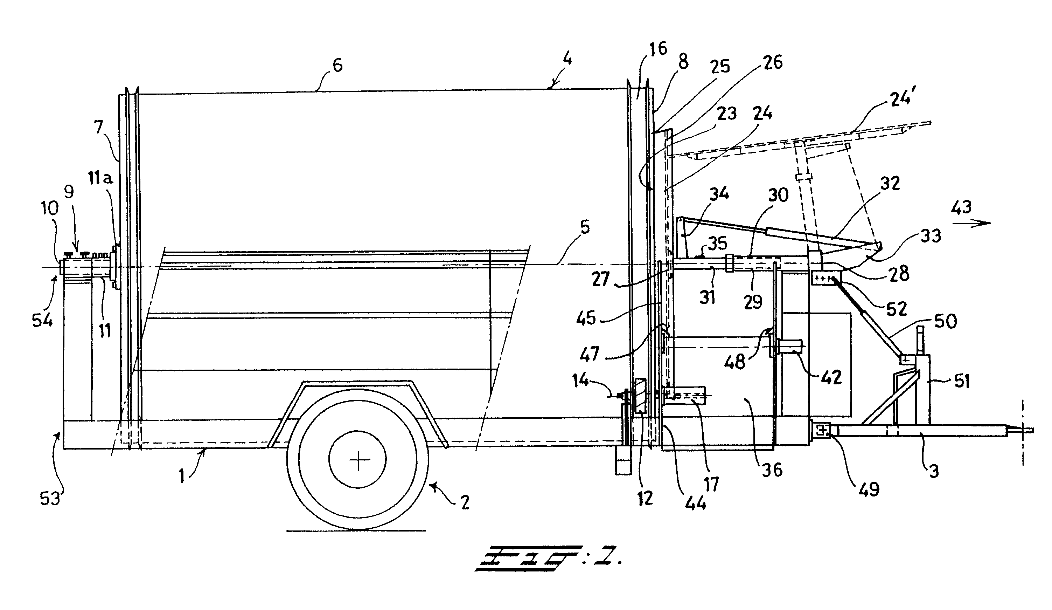

The mixing drum 4 is supported on the frame on the left side in Fig. 1 by means of a bearing 9 which is fitted coaxially with the longitudinal axis 5 of the mixing drum 4. The bearing 9 comprises a bearing pin 10 rigidly attached to the frame 1 and a bearing sleeve 11 which is fitted rotatably on the bearing pin 10 and is rigidly attached to the rear side wall 7 of the mixing drum 4 by means of a flange plate 11a.

At the right side in Fig. 1 the mixing drum 4 rests on two supporting rollers 12 and 13 which are fixed on either side of the frame, and of which the axes 14, 15 run parallel to the longitudinal axis 5 of the mixing drum, and which run in an annular channel 16 provided near the end of the mixing drum on the periphery thereof. The drive of the mixing drum 4 takes place by means of the supporting rollers 12 and 13, which are in turn driven by hydraulic motors. The drive motor 17 for the supporting roller 12 is shown in Fig. 1.

Instead of one supporting roller 12, 13 respectively on either side of the frame, two supporting rollers forming a tandem (not shown here) for supporting the mixing drum 4 may be provided on either side of the frame.

The cylindrical circumferential wall 6 of the mixing drum 4 has a flap-out part 18 for forming an infeed opening 19 for the feed ingredients to be mixed. In the embodiment shown here the flap-out part 18 of the circumferential wall 6 and the infeed opening 19 are rectangular in shape and extend over a large part of the length of the mixing drum 4. Due to the fact that the infeed opening 19 takes up a relatively large part of the circumferential wall 6 of the mixing drum 4, it is possible to throw, for example, large bales of hay in their entirety into the mixing drum, without blockages or other undesirable effects occurring.

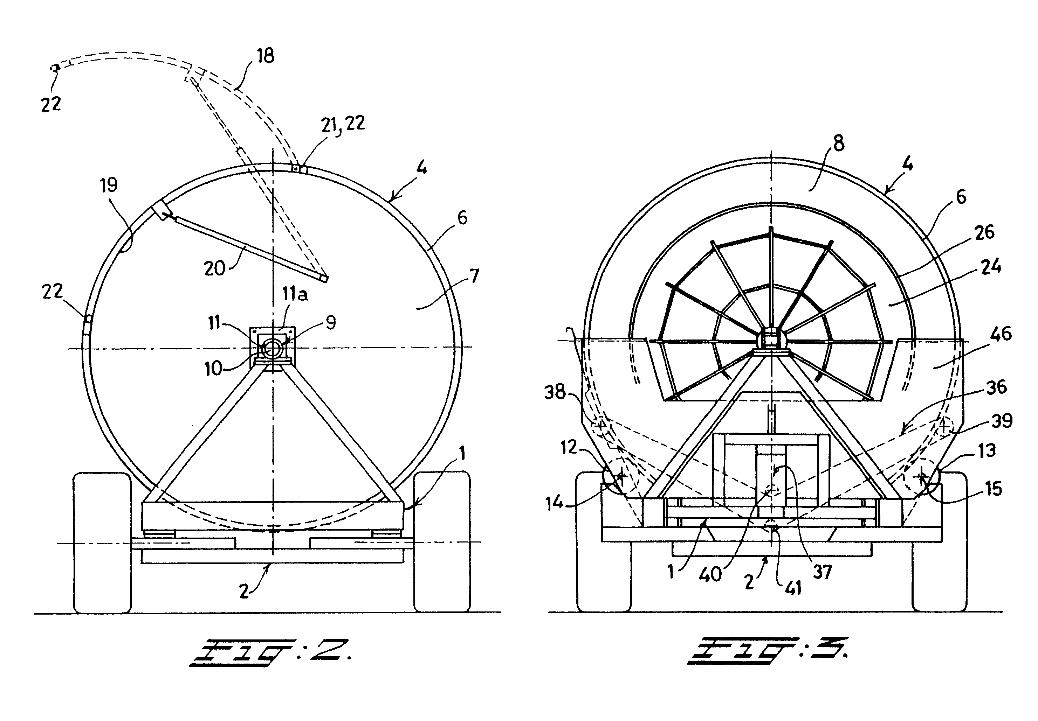

The flap-out part 18 of the circumferential wall 6 of the mixing drum 4 is flapped out or flapped in by means of a hydraulic or pneumatic jack 20 which at one side is hingedly connected to the rear end wall 7 of the mixing drum 4 and at the other side is hingedly connected to the flap-out part 18, as indicated in Fig. 2. The flap-out part 18 is hingedly connected by means of hinges 21 to the remainder of the circumferential wall 6 of the mixing drum 4. The pivot determined by the hinges 21 runs parallel to the longitudinal axis 5 of the mixing drum. At the other side the flap-out part 18 can be locked with the remainder of the circumferential wall 6 by locking elements 22 to be operated by means of hydraulic or pneumatic jacks (not shown here). In the flapped-in and locked position of the flap-out part 18 the infeed opening 9 is hermetically sealed.

The mixing drum 4 is provided on the inside with guide plates and elements for loosening and mixing the feed ingredients, which are not shown here, which are known per se, and which can be of any suitable type.

The front side wall 8 of the mixing drum 4 is provided with a round outlet opening 23 for the mixed feed, which is coaxial with the longitudinal axis 5 of the mixing drum 4. The outlet opening 23 can be closed by a cover 24. The outlet opening 23 takes up a large part of the front end wall 8 of the mixing drum 4. A funnel-shaped ring 26 connecting to the edge 25 of the outlet opening 23 is provided around the outlet opening 23. The cover 24 fits into the funnel-shaped ring 26, and can thus shut off the outlet opening 23. The cover 24 is fitted rotatably about its axis on the end 27 of an arm 29 which is variable in length and is hingedly connected at the hinge point 28 to the frame 1. The arm 29 comprises two parts sliding telescopically into each other, one part 30 being connected to the frame 1, and the other part 31 which is slidable relative to the part 30 being connected to the cover 24. The cover 24 is moved by means of a hydraulic or pneumatic jack 32, which at one side is connected to a part 33 of the frame 1 projecting forward and slightly upward, and at the other side is connected to an upward extending part 34 of the slidable part 31 of the arm 29. When the jack 32 is retracted for opening of the outlet opening 23 the slidable part 31 will first slide vertically into the part 30 of the arm 29, in which case the cover 24 is moved out of the funnel-shaped ring 26, until a stop 35 on the slidable part 31 comes against the part 30 of the arm 29. At that moment the arm 29 will proceed to move up to the position shown by dotted lines, in which position the cover is indicated by the reference number 24'. When the jack 32 is extended for closing of the outlet opening 23 the movement sequence is in the reverse order.

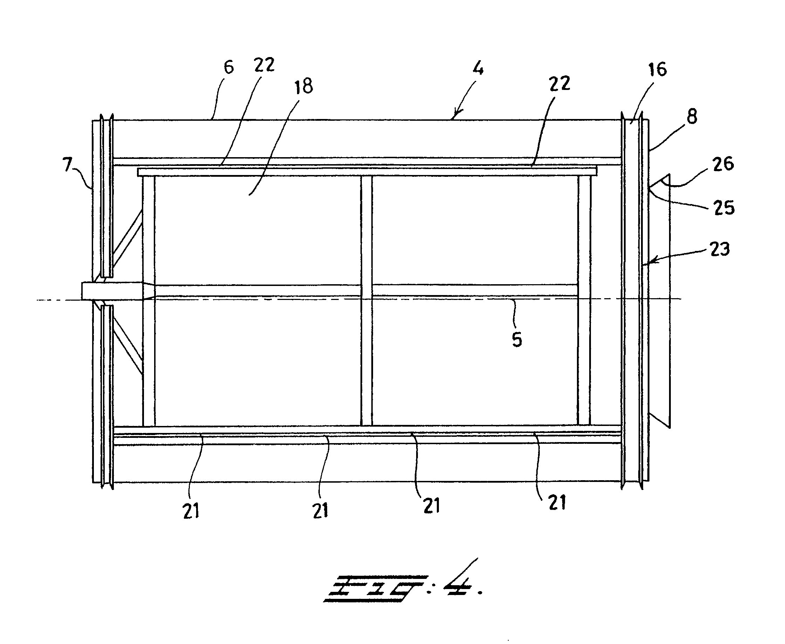

A conveyor belt 36, extending at right angles to the longitudinal axis 5 of the mixing drum 4, is fitted on the frame 1 below the outlet opening 23, for discharging the mixed feed coming out of the outlet opening 23 to the side. According to the invention, the conveyor belt 36 runs from the centre 37 lying below the longitudinal axis 5 of the mixing drum 4 upwards towards both sides. The conveyor belt 36 is movable in both directions. It is possible with this conveyor belt to discharge the mixed feed coming out of the outlet opening 23 in a very well metered and controlled manner to the sides and dispense it into feed troughs or channels. Any lumps coming out of the outlet opening 23 will roll back on the upward slanting conveyor belt and fall apart. In the embodiment shown in Fig. 3 the conveyor belt which comprises one continuous belt is guided over two end pulleys 38 and 39 situated on the side and over two rollers 40 and 41 situated in the centre. The conveyor belt is driven by means of a chain running over the rollers 38 - 41, which is in turn driven by a hydraulic motor 42.

In another embodiment (not shown here) the conveyor belt is a chain like conveyor belt guided over two end pulleys and between these pulleys along two guide rails, guiding the edges of the conveyor belt. The guide rails are curved downward such that the lowest point lies below the longitudinal axis 5 of the mixing drum and that the conveyor belt extends from there upwards to both sides.

The outlet opening 23 and the conveyor belt 36 are preferably fitted on the front side of the device, viewed in the direction of travel 43 (see Fig. 1). The driver of the pulling vehicle consequently always has a good view of the mixed feed coming out of the outlet opening 23 and its discharge to the side of the device, so that the whole operation can be easily controlled.

A flat vertical plate 45 is fitted between the edge 44 of the conveyor belt 36 lying at the sides of the mixing drum 4 - which conveyor belt lies below the funnel-shaped ring 26 - and the funnel-shaped ring. This flat plate 45 is disposed at the bottom side a short distance away next to the conveyor belt 36 and with its top edge connects with slight play to the outside of the funnel-shaped ring 26. This plate 45 prevents feed from the conveyor belt 36 from falling between said conveyor belt and the rotating mixing drum 4. At the other side of the conveyor belt 36 a second flat vertical plate is disposed next to the conveyor belt, which plate prevents the feed lying on the conveyor belt 36 from falling at the other side of the conveyor belt. Both plates 45 and 46 can be provided with downward slanting strips 47 and 48 which project from the plates 45 and 46 over the side edges of the conveyor belt 36, and which prevent feed from falling between the conveyor belt 36 and the plates 45 and 46.

The drawbar 3 is hingedly connected at the hinge point 49 to the frame 1. The drawbar 3 is also connected to the frame 1 by means of a hydraulic or pneumatic jack 50. The jack 50 is hingedly connected at one side to an extension piece 51 firmly fixed on the drawbar, and at the other side is connected to the frame 1 at a hinge point 52 situated above the hinge point 42. The position of the frame 1 with the mixing drum 4 mounted thereon can be adjusted relative to the horizontal by retracting and extending the jack 50. The quantity of mixed feed coming out of the outlet opening 23 can be regulated in this way.

The drawbar 3 with extension piece 51 and the jack 50 can, if necessary, also be fixed on the rear side of the frame, at the position of the points indicated by 53 and 54 (see Fig. 1). Such an arrangement can be necessary if all places where feed has to be dispensed can be reached only by an outlet opening lying on the rear side of the device.

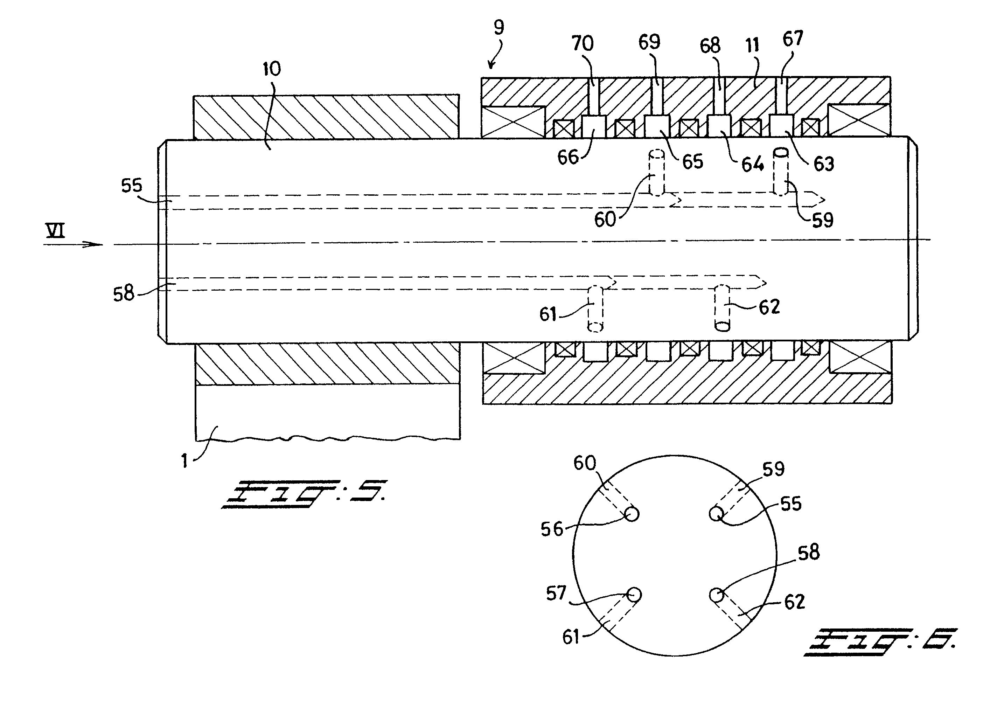

As already mentioned earlier, the mixing drum 4 is supported at the rear side on the frame 1 by means of a bearing 9 shown schematically and on an enlarged scale in Fig. 5. This bearing is of a special design, in order to make it possible to make the feed and discharge lines of the hydraulic or pneumatic jacks for movement of the flap-out part 18 and for operation of the lock of said flap-out part run through this bearing. The bearing pin 10, which is rigidly attached to the frame 1, is provided with channels 55 - 58 extending in the lengthwise direction and channels 59 - 62 connecting thereto and running in the radial direction to the external surface of the pin 10. The bearing sleeve 11, which is rigidly attached to the mixing drum 4, is provided on the inside at the position of the bores 59 -62 with annular grooves 63 - 66, which together with the external surface of the bearing pin 10 form annular channels, and channels 67 - 70 running from the annular grooves 63 - 66 to the outside of the bearing sleeve 11. Seals, which interact in a sealing manner with the bearing pin 10, are fitted between the annular grooves 63 - 66 and at both ends of the bearing sleeve 11. The pressure lines coming from a pressure source and the return lines are connected to channels 55 - 58 running in the lengthwise direction of the bearing pin. The lines to the jacks for movement of the flap-out part 18 and control of the locking element for said flap-out part are connected to the channels 67 - 70 in the bearing sleeve 11.

With the mixing and delivery device for animal feed according to the invention the mixed feed can be dispensed to the places for which it is intended in a manner which is very well metered and controlled. Animal feed ingredients of widely varying kinds can be mixed together in the mixing drum. Thus, for example, large bales of hay can be deposited in one go in the mixing drum. The hay of these bales is loosened in a very efficient manner and mixed with other feed ingredients, without much energy being required for this, and without great forces being exerted on the feed to be mixed or on parts of the device.

**Claims**

1. Mobile mixing and dispensing device for animal feed, comprising a mobile frame (1), an essentially cylindrical mixing drum (4) which is mounted on the mobile frame so that it is rotatable about its longitudinal axis (5) extending essentially in the horizontal direction, and which is provided with an infeed opening (19) for the feed ingredients to be mixed, and of which one (8) of the end walls is provided with a round outlet opening (23) for the mixed feed which is coaxial with the longitudinal axis of the mixing drum, and also comprising a conveyor belt (36) mounted on the frame below the outlet opening and extending at right angles to the longitudinal axis of the mixing drum, for discharging to the side the mixed feed coming out of the outlet opening, **characterized in that** the conveyor belt (36) runs from the centre (37), lying below the longitudinal axis (5) of the mixing drum (4), upwards towards both sides, and is movable in both directions.

2. Device according to claim 1, **characterized in that** the outlet opening (23) and the conveyor belt (36) are fitted at the front side of the device, viewed in the direction of travel (43) of the device.

3. Device according to claim 1 or 2, **characterized in that** a funnel-shaped ring (26) connecting to the edge (25) of the outlet opening (23) is provided around the outlet opening (23).

4. Device according to claim 3, **characterized in that** a flat vertical plate (45) is fitted between the edge (44) of the conveyor belt (36) lying at the side of the mixing drum (4) - which conveyor belt lies below the funnel-shaped ring (26) - and the funnel-shaped ring (26), said plate being disposed at the bottom side a short distance away next to the conveyor belt (36) and with its top edge connecting with slight play to the outside of the funnel-shaped ring (26).

5. Device according to claim 3, **characterized in that** a device for shutting off the outlet opening (23) is provided, which device comprises a cover fitting into the funnel-shaped ring (26), which cover is fitted rotatably about its axis on the end (27) of an arm (29) which is variable in length and is hingedly connected to the frame (1), and by means of which the cover (24) can be placed in the funnel-shaped ring (26) and can be removed again from it.

6. Device according to claim 1, **characterized in that** the cylindrical circumferential wall (6) of the mixing drum (4) has a flap-out part (18) for forming the infeed opening (19).

7. Device according to any of claims 1-6, **characterized in that** the device is provided with hydraulic or pneumatic jacks (20, 32) for moving the cover (24) for the outlet opening (23) and the flap-out part (18) of the circumferential wall (6) of the mixing drum (4).

8. Device according to any of claims 1 - 7, **characterized in that** the device is provided with at least one locking element (22) to be controlled by means of a hydraulic or pneumatic jack, for locking the flap-out part (18) of the cylindrical circumferential wall (6) when the infeed opening (19) is closed.

9. Device according to claim 7 or 8, **characterized in that** the mixing drum (4) is supported on the frame (1) at the side lying opposite the outlet opening (23) by means of a bearing (9) lying coaxially with the longitudinal axis (5) of the mixing drum (4), and in that the supply and discharge lines for the jacks for movement of the flap-out part (18) of the circumferential wall (6) and operation of the locking element (22) or the locking elements (22) thereof run through said bearing (9).

Fig. 2.

Fig.2.

Fig.3.

EP 0 454 259 A1

EP 0 454 259 A1

FIG. 4.

Fig. 5.

Fig. 6.

EP 0 454 259 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y,D | NL-A-7 607 053 (HOOPMAN ONDERZOEK & ONTWIKKELING BV.) | 1,2 | A01K5/00<br>B01F15/00 |
| A | * page 5, line 2 - line 19; claims 1,2; figures 1-4,9,10,12 * | 6-8 | F16L39/04 |
| Y | GB-A-2 010 109 (BAYERISCHE PFLUGFABRIK)<br>* page 1, line 104 - line 114; figures 1,2 * | 1,2 | |
| A | DE-B-2 918 519 (BAYERISCHE PFLUGFABRIK)<br>* the whole document * | 1 | |
| A | GB-A-2 085 742 (CHALLENGE-COOK BROS., INCORPORATED)<br>* page 4, line 5 - line 23; figures 1-11 * | 1,3,5 | |
| A | CA-A-1 258 065 (DALMAN)<br>* page 7, last paragraph - page 8, paragraph 1 *<br>* page 9 - page 12; figures 1-7 * | 1,6-9 | |
| A | US-A-4 126 336 (ORTLOFF)<br>* column 1, line 57 - column 2, line 19; figures 1-5 * | 9 | TECHNICAL FIELDS SEARCHED (Int. Cl.5 ) |
| A | GB-A-2 016 291 (POYSER) | | A01K<br>B01F |
| A | WO-A-8 706 674 (OFFSHORE PRODUCTION SYSTEMS) | | F16L<br>A23N |
| A | FR-A-2 604 866 (POSTHUMUS) | | A01C |

The present search report has been drawn up for all claims

| Place of search | Date of completion of the search | Examiner |
|---|---|---|
| THE HAGUE | 11 JULY 1991 | VON ARX V.U. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document